# EUROPEAN PATENT APPLICATION

(11) **EP 4 632 035 A1**
(43) Date of publication of application: **15.10.2025**
(21) Application number: 23900723.0
(22) Date of filing: 07.12.2023
(51) Int. Cl.: C09K 9/00, C09D 5/29, C09D 7/63, C09D 201/00, G02F 1/1523

(54) **BLACK ELECTROCHROMIC MATERIAL AND METHOD FOR MANUFACTURING SAME, PAINT AND METHOD FOR MANUFACTURING SAME, MIXED PAINT AND METHOD FOR MANUFACTURING SAME, COLOR-VARIABLE ELECTRODE AND METHOD FOR MANUFACTURING SAME, AND ELECTROCHROMIC ELEMENT**

(30) Priority: 07.12.2022 JP 2022195941
(71) Applicant: National Institute of Advanced Industrial Science and Technology, Chiyoda-ku Tokyo 100-8921 (JP)
(72) Inventor: TAJIMA Kazuki, Tsukuba-shi, Ibaraki 305-8565 (JP)
(74) Representative: Dehns
(86) International application number: PCT/JP2023/043811
(87) International publication number: WO 2024/122611

(57) **Abstract**

To provide an electrochromic material and a method for producing the same, which are used in a coating material that exhibits reversible color change between black and transparent, as well as a coating material and a mixed coating material containing the electrochromic material and methods for producing the same, a color-variable electrode, and an electrochromic device.

[Solution]

A black electrochromic material that reversibly changes color between black and transparent through an electrochemical redox reaction, comprising one or more nanoparticles selected from the group consisting of copper oxide nanoparticles that are heat-treated products of basic copper carbonate, titanium oxide nanoparticles, titanium nitride nanoparticles, nickel oxide nanoparticles, nickel hydroxide nanoparticles, zirconium oxide nanoparticles, and metallic iridium nanoparticles.

## Description

### [Field of the Invention]

The present invention relates to a black electrochromic material and a method for producing the same, a coating material and a method for producing the same, a mixed coating material and a method for producing the same, a color-variable electrode and a method for producing the same, and an electrochromic device.

### [Background Art]

An electrochromic device (ECD) is a color-variable device that uses an electrochromic material (EC material), whose color changes by electrochemical redox reaction. It is used for purposes such as controlling reflectance through color change when mounted in vehicle mirrors, or controlling the transmittance of sunlight and infrared rays when used in windows of vehicles or buildings, thereby improving air conditioning efficiency. Furthermore, applications in displays and sunglasses are also being studied.

In recent years, applications to light-controlling glass for use in building materials and vehicles have been actively studied. In applications of electrochromic devices (ECDs), including light-controlling glass, the color has extremely important significance. In particular, the realization of colors such as black, gray, and brown is desired. On the other hand, many of the ECDs that are currently commercialized exhibit a blue-to-transparent color change. Materials used in these ECDs include: oxides represented by tungsten oxide (Patent Document 1), small molecules represented by viologens (Patent Document 2), polymers represented by PEDOT-PSS (Patent Document 3), and coordination polymers represented by metal-cyano complexes (Patent Document 4). Using these materials, the currently commercialized products exhibit blue-to-transparent color change.

In recent years, electrochromic materials that achieve brown or black colors have been mainly developed using organic polymers (Patent Document 5, Non-Patent Documents 1 to 3). However, organic polymer materials generally tend to have issues with light resistance, and therefore are not suitable for applications in light-controlling glass.

From the viewpoint of properties such as light resistance, inorganic materials are considered to have certain advantages. Among inorganic materials, metal oxides and metal-cyano complexes have already been commercialized. In the case of applications for light-controlling glass, it is required not only that the material exhibit a desired color in the colored state, but also that it become colorless and transparent in the colorless state. Furthermore, in order to avoid scattering, it is necessary to form a smooth thin film on a transparent electrode. However, as of now, no inorganic black-to-transparent electrochromic material has been reported.

### [Prior Art Documents]

### [Patent Documents]

[Patent Document 1] JP H08-254717 A
[Patent Document 2] JP 2009-215166 A
[Patent Document 3] JP 2005-519316 A
[Patent Document 4] JP 2011-180469 A
[Patent Document 5] JP 2010-33016 A
[Patent Document 6] JP 2016-74569 A

### [Non-Patent Documents]

[Non-Patent Document 1] Color tuning for black-to-transmissive conjugated copolymer with excellent electrochromic properties via electrochemical copolymerization of two donor-acceptor type monomers, https://doi.org/10.1016/j.matdes.2020.108903
[Non-Patent Document 2] Colorless to black electrochromic devices using subtractive color mixing of two electrochromes: A conjugated polymer with a small organic molecule, https://doi.org/10.1016/j.orgel.2020.105748
[Non-Patent Document 3] Colorless-to-Black Electrochromism from Binary Electrochromes toward Multifunctional Displays, https://dx.doi.org/10.1021/acsami.0c11840
[Non-Patent Document 4] Highly transparent to truly black electrochromic devices based on an ambipolar system of polyamides and viologen, doi:10.1038/am.2017.57
[Non-Patent Document 5] Colorless-to-black electrochromic devices based on ambipolar electrochromic system consisting of cross-linked poly(4-vinyltriphenylamine) and tungsten trioxide with high optical contrast in visible and near-infrared regions, https://doi.org/10.1016/j.cej.2020.126402

### [Summary of the Invention]

### [Problems to be Solved by the Invention]

As described above, there is a demand for an inorganic electrochromic material that exhibits reversible color change between black and transparent, as well as a method for producing the same. In addition, there is a demand for a coating material (mixed coating material) containing such an electrochromic material and a method for producing the same, a color-variable electrode, and an electrochromic device.

The present invention has been made in view of the above circumstances, and an object thereof is to provide an electrochromic material that exhibits reversible color change between black and transparent and a method for producing the same; a coating material and a mixed coating material containing the electrochromic material, which exhibit reversible color change between black and transparent, and methods for producing the same; a color-variable electrode; and an electrochromic device.

### [Means for Solving the Problems]

To solve the above problems, the following black electrochromic material, coating material, mixed coating material, light-controlling electrode, and electrochromic device are provided.
[1] A black electrochromic material that reversibly changes color between black and transparent through an electrochemical redox reaction,
   wherein the black electrochromic material comprises one or more nanoparticles selected from the group consisting of copper oxide nanoparticles that are heat-treated products of basic copper carbonate, titanium oxide nanoparticles, titanium nitride nanoparticles, nickel oxide nanoparticles, nickel hydroxide nanoparticles, zirconium oxide nanoparticles, and metallic iridium nanoparticles.
[2] A coating material that reversibly changes color between black and transparent through an electrochemical redox reaction,
   comprising the black electrochromic material according to [1] dispersed in a weakly acidic solvent.
[3] The coating material according to [2],
   wherein the solvent contains citric acid and the solvent has a pH of 3.0 or less.
[4] The coating material according to [2] or [3],
   wherein the content of the nanoparticles is 1 mass% or more and 20 mass% or less.
[5] The coating material according to [2] to [4],
   wherein the zeta potential is from -36 mV to -28 mV.
[6] A mixed coating material comprising the coating material according to [2] to [5] and a coating material containing another oxide-based electrochromic material.
[7] The coating material according to [2] to [5] or the mixed coating material according to [6], comprising one or more selected from the group consisting of polyvinyl alcohol (PVA), sodium carboxymethyl cellulose (CMC), hydroxypropyl cellulose (HPC), hydroxyethyl cellulose (HEC), polyethylene glycol, polypropylene glycol, trifluoromethanesulfonylimide, methyl methacrylate, and polydimethylsiloxane, as a binder.
[8] A color-variable electrode comprising a thin film containing the black electrochromic material, the thin film being formed on an electrode layer using the coating material according to [2] to [5] or the mixed coating material according to [6].
[9] An electrochromic device comprising the color-variable electrode according to [8].
[10] The electrochromic device according to [9],
   comprising an electrode composed of an electrochromic material that becomes transparent in an oxidized state.

To solve the above problems, the following methods for producing a black electrochromic material, a coating material, a mixed coating material, and a color-variable electrode are provided.
[11] A method for producing a black electrochromic material that reversibly changes color between black and transparent through an electrochemical redox reaction,
   the method comprising a first step of obtaining copper oxide nanoparticles by heating basic copper carbonate.
[12] A method for producing a coating material that reversibly changes color between black and transparent through an electrochemical redox reaction,
   the method comprising:
   a first step of obtaining copper oxide nanoparticles by heating basic copper carbonate; and
   a second step of dispersing the copper oxide nanoparticles in a weakly acidic solvent to obtain the coating material.
[13] The method for producing a coating material according to [12],
   wherein, in the second step, the solvent contains citric acid and the solvent has a pH of 3.0 or less.
[14] The method for producing a coating material according to [12] or [13],
   wherein the content of the copper oxide nanoparticles in the coating material is 1 mass% or more and 20 mass% or less.
[15] A method for producing a mixed coating material,
   comprising a step of mixing the coating material according to [2] to [5] with a coating material containing another oxide-based electrochromic material.
[16] The method for producing a coating material according to [12] to [14] or the method for producing a mixed coating material according to [15],
   comprising using one or more selected from the group consisting of polyvinyl alcohol (PVA), sodium carboxymethyl cellulose (CMC), hydroxypropyl cellulose (HPC), hydroxyethyl cellulose (HEC), polyethylene glycol, polypropylene glycol, trifluoromethanesulfonylimide, methyl methacrylate, and polydimethylsiloxane, as a binder.
[17] A method for producing a color-variable electrode,
   comprising a step of forming a thin film containing a black electrochromic material on an electrode layer using the coating material according to any one of [2] to [5] or the mixed coating material according to [6].
[18] A method for producing an electrochromic device,
   comprising a step of laminating the color-variable electrode according to [8] and an electrolyte layer.

### [Brief Description of the Drawings]

[Fig. 1] This figure shows a photograph of copper oxide nanoparticles obtained from basic copper carbonate.
[Fig. 2] This figure shows a photograph of the appearance of a coating material in which copper oxide nanoparticles are dispersed (the coating material of the present invention).
[Fig. 3] This figure shows optical transmission spectra of black coating materials in which oxide nanoparticles of various solid contents are dispersed.
[Fig. 4] This figure shows chromaticity of black coating materials in which oxide nanoparticles of various solid contents are dispersed.
[Fig. 5] This figure shows a schematic structural view of an example of an electrode fabricated from a coating material in which copper oxide nanoparticles are dispersed.
[Fig. 6] This figure shows a schematic structural view of an example of an electrochromic device.
[Fig. 7] This figure shows X-ray structural analysis results of copper oxide nanoparticles.
[Fig. 8] This figure shows a photograph of the pH dependence of the appearance of the coating material of the present invention.
[Fig. 9] This figure shows the particle size distribution of the coating material of the present invention.
[Fig. 10] This figure shows a CV curve of a thin-film electrode fabricated from a coating material (the coating material of the present invention) in which 5 wt.% of copper oxide nanoparticles are dispersed.
[Fig. 11] This figure shows X-ray structural analysis results of copper oxide nanoparticles extracted from the coating material of the present invention containing PVA.
[Fig. 12] This figure shows the average particle size of the coating material of the present invention containing PVA.
[Fig. 13] This figure shows the zeta potential of the coating material of the present invention containing PVA.
[Fig. 14] This figure shows a surface FE-SEM image of a thin-film electrode fabricated from the coating material of the present invention containing PVA.
[Fig. 15] This figure shows electrochromic characteristics of a thin-film electrode fabricated from the coating material of the present invention containing PVA.
[Fig. 16] This figure shows changes in optical transmission spectra of a thin-film electrode fabricated from the coating material of the present invention.
[Fig. 17] This figure shows a photograph of the appearance of a thin-film electrode fabricated from the coating material of the present invention.
[Fig. 18] This figure shows changes in optical transmission spectra of a thin-film electrode fabricated from a mixed coating material of the present invention (copper oxide nanoparticle dispersion coating material and tungsten oxide nanoparticle dispersion coating material).
[Fig. 19] This figure shows particle size distributions of the coating materials of the present invention (titanium oxide nanoparticle dispersion coating material, titanium nitride nanoparticle dispersion coating material, metallic iridium nanoparticle dispersion coating material, nickel hydroxide nanoparticle dispersion coating material, copper oxide nanoparticle dispersion coating material, and tungsten oxide nanoparticle dispersion coating material).
[Fig. 20] This figure shows a photograph of the appearance of thin-film electrodes fabricated from the coating materials of the present invention (titanium oxide nanoparticle dispersion coating material, titanium nitride nanoparticle dispersion coating material, metallic iridium nanoparticle dispersion coating material, nickel hydroxide nanoparticle dispersion coating material, copper oxide nanoparticle dispersion coating material, and tungsten oxide nanoparticle dispersion coating material).
[Fig. 21] This figure shows changes in optical transmission spectra of thin-film electrodes fabricated from the coating materials of the present invention (titanium oxide nanoparticle dispersion coating material, titanium nitride nanoparticle dispersion coating material, metallic iridium nanoparticle dispersion coating material, nickel hydroxide nanoparticle dispersion coating material, copper oxide nanoparticle dispersion coating material, and tungsten oxide nanoparticle dispersion coating material).
[Fig. 22] This figure shows chromaticity changes associated with electrochemical redox reactions of thin-film electrodes fabricated from the coating materials of the present invention (titanium oxide nanoparticle dispersion coating material, titanium nitride nanoparticle dispersion coating material, metallic iridium nanoparticle dispersion coating material, nickel hydroxide nanoparticle dispersion coating material, copper oxide nanoparticle dispersion coating material, and tungsten oxide nanoparticle dispersion coating material).
[Fig. 23] This figure shows time-dependent changes in optical transmission spectra of thin-film electrodes fabricated from the coating materials of the present invention (titanium oxide nanoparticle dispersion coating material, titanium nitride nanoparticle dispersion coating material, metallic iridium nanoparticle dispersion coating material, nickel hydroxide nanoparticle dispersion coating material, copper oxide nanoparticle dispersion coating material, and tungsten oxide nanoparticle dispersion coating material).
[Fig. 24] This figure shows the particle size distribution of the coating material of the present invention (zirconium oxide nanoparticle dispersion coating material).
[Fig. 25] This figure shows the optical transmission spectrum of a thin-film electrode fabricated from the coating material of the present invention (zirconium oxide nanoparticle dispersion coating material).

### [Mode for Carrying Out the Invention]

As a result of extensive studies, the present inventor has found that by using copper oxide as an inorganic electrochromic (EC) material, a black-to-transparent color change can be achieved, and that a dispersion (coating material) in which the electrochromic material is dispersed in a solvent can be formed as a smooth thin film on an electrode by a technique such as coating.

In past studies, it has been suggested that copper oxide thin films produced by methods such as sputtering or sol-gel processing exhibit transmittance changes in the visible light region and show dark colors; however, it has been difficult for such films to exhibit stable color-changing behavior.

The present inventor has found that copper oxide nanoparticles (electrochromic material) exhibiting a stable black-to-transparent color change can be obtained simply by firing basic copper carbonate, for example, in a furnace, and thus completed the present invention. The inventor has also found that various oxide materials (e.g., titanium oxide nanoparticles, titanium nitride nanoparticles, nickel oxide nanoparticles, nickel hydroxide nanoparticles, zirconium oxide nanoparticles, and metallic iridium nanoparticles) can also exhibit black coloration by controlling their particle size and functionality, and are usable as black electrochromic materials.

Hereinafter, an embodiment of the black electrochromic material, the coating material and the mixed coating material of the present invention and methods for producing the same, the color-variable electrode and its production method, and the electrochromic device will be described.

### <Black Electrochromic Material and Method for Producing the Same>

The black electrochromic material (EC material) of the present invention can be used in a coating material that reversibly changes color between black and transparent through an electrochemical redox reaction. In the present invention, "transparent" does not necessarily mean that the absorption coefficient in the visible light region is zero. What is important is that there is a sufficient difference in absorbance between the colored state and the colorless transparent state. It is preferable that the ratio of absorbance in the colored state to that in the colorless transparent state is 3 or more within the wavelength range of 450 nm to 550 nm, which corresponds to high human visual sensitivity; more preferably 4 or more, and particularly preferably 5 or more.

Specifically, in one embodiment of the black electrochromic material of the present invention, the material comprises copper oxide nanoparticles that are heat-treated products of basic copper carbonate. The term "basic copper carbonate" as used herein is a general term for basic salts of copper(II) carbonate, which are inorganic copper salts composed of divalent copper ions (Cu²⁺), carbonate ions (CO₃²⁻), and hydroxide ions (OH⁻).

The method for producing the black electrochromic material of the present invention includes a first step of obtaining copper oxide nanoparticles by heating basic copper carbonate.

Herein, the term "copper oxide nanoparticles" in the present invention refers to particles synthesized from basic copper carbonate, the composition of which is represented by CuOₓ.

According to one embodiment of the method for producing the black electrochromic material of the present invention, copper oxide nanoparticles can be synthesized as a black electrochromic material (EC material) by heating basic copper carbonate as a raw material, based on the following reaction formula. By dispersing these copper oxide nanoparticles in a solvent, a coating material (copper oxide nanoparticledispersed coating material) can be obtained that appears black in the oxidized state and becomes transparent in the reduced state.

Basic copper carbonate exists in several forms with different ratios of carbonate ions to hydroxide ions, including Cu₂(OH)₂CO₃, CuCO₃·Cu(OH)₂, 2CuCO₃·Cu(OH)₂, and Cu₂(OH)₂CO₃·H₂O. For example, when a general reagent of basic copper carbonate (manufactured by FUJIFILM Wako Pure Chemical Corporation) is used, copper oxide nanoparticles can be obtained by the following reaction formula.

[Chemical Formula 1] Cu(OH)₂ · CuCO₃ → 2CuO + CO₂ + H₂O

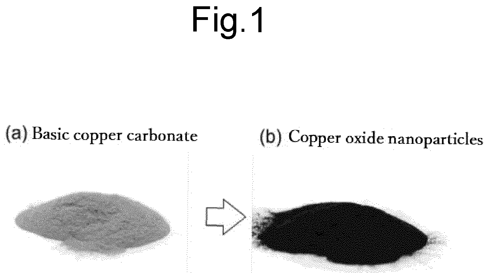

Specifically, for example, copper oxide nanoparticles can be synthesized by using basic copper carbonate as a raw material and heating it in air in an electric furnace. The heating temperature and heating time are not particularly limited; however, for instance, heating basic copper carbonate at 250 to 500°C for about 1 to 10 hours in an electric furnace allows copper oxide nanoparticles having a morphology as shown in Figure 1 to be obtained.

The particle diameter (average particle diameter) of the copper oxide nanoparticles is preferably small in order to enhance the electrochemical response speed (by increasing the specific surface area), and also preferably small for forming a smooth thin film. Here, the particle diameter (average particle diameter) refers to the particle size at 50% cumulative volume in the particle size distribution obtained by methods such as laser diffraction/scattering. From this perspective, the upper limit of the primary particle diameter of the copper oxide nanoparticles is preferably 500 nm or less, more preferably 300 nm or less, and particularly preferably 100 nm or less. The lower limit of the primary particle diameter is not particularly limited, but is practically 4 nm or more. In the present invention, the term "primary particle diameter" refers to the diameter of a primary particle, and may be a circle-equivalent diameter derived from the full width at half maximum (FWHM) of peaks in powder X-ray diffraction analysis. The primary particle diameter of the copper oxide nanoparticles can also be measured using, for example, a particle size distribution analyzer based on dynamic light scattering (DLS).

The black electrochromic material of the present invention may contain, in addition to copper oxide nanoparticles that are heat-treated products of basic copper carbonate, other electrochromic materials or the like. In such a case, the content of the above-described copper oxide nanoparticles in the black electrochromic material of the present invention may be 50 mass% or more, 60 mass% or more, 70 mass% or more, 80 mass% or more, or 90 mass% or more.

It should be noted that when other commercially available copper oxide reagents that are not derived from basic copper carbonate are used as raw materials, they do not disperse by the method described later, and therefore cannot be formulated into a coating material, and also exhibit little to no electrochromic properties.

In one embodiment of the black electrochromic material of the present invention, the material comprises one or more selected from the group consisting of titanium oxide nanoparticles, titanium nitride nanoparticles, nickel oxide nanoparticles, nickel hydroxide nanoparticles, zirconium oxide nanoparticles, and metallic iridium nanoparticles.

These nanoparticles predominantly have an average primary particle diameter in the range of 10 to 50 nm, and in particular, nanoparticles in the range of 5 to 30 nm effectively contribute to the manifestation of performance. When the average particle diameter is 100 µm or more, the particles are too coarse to be formulated into a coating material from the viewpoint of dispersibility and time-dependent stability, and they also do not exhibit electrochromic properties.

### <Coating Material and Method for Producing the Same>

The coating material of the present invention is a coating material containing the black electrochromic material described above. Specifically, in one embodiment of the coating material of the present invention, copper oxide nanoparticles-which are heat-treated products of basic copper carbonate-are dispersed in a weakly acidic solvent.

The method for producing the coating material of the present invention includes the following steps:
a first step of obtaining copper oxide nanoparticles by heating basic copper carbonate; and
a second step of dispersing the copper oxide nanoparticles in a weakly acidic solvent.

Specifically, in the second step, the solvent may be any material capable of dispersing the copper oxide nanoparticles and not affecting them. For example, water or alcohol may be used as the solvent. The alcohol may include one or more selected from isopropanol, ethanol, methanol, n-propanol, isobutanol, and n-butanol. From the viewpoint of improving the dispersibility of the copper oxide nanoparticles, the solvent is preferably water, for example.

The obtained copper oxide nanoparticles can be suitably dispersed in an aqueous solution adjusted to be weakly acidic using, for example, citric acid, thereby forming a coating material. The copper oxide nanoparticles used in the present invention are difficult to disperse in alkaline or neutral solvents, but can be readily dispersed by using a weakly acidic solvent containing, for example, citric acid. On the other hand, strong acids are not preferred because copper oxide dissolves in them.

For example, citric acid may be dissolved in water used as the solvent to adjust the pH, and then copper oxide nanoparticles may be added. When the pH of the solvent containing citric acid or the like is 3.0 or less, the copper oxide nanoparticles can be suitably dispersed. Although the lower limit of the pH is not particularly limited, it may be, for example, 2.0 or higher.

The content (solid content) of copper oxide nanoparticles in the coating material is not particularly limited and can be appropriately adjusted depending on the application, but a range of 1 mass% to 20 mass% is exemplified. The coating material of the present invention can exhibit a black color even with a copper oxide nanoparticle content of 1 mass%, and can provide a black coating material with excellent dispersibility even at 20 mass%.

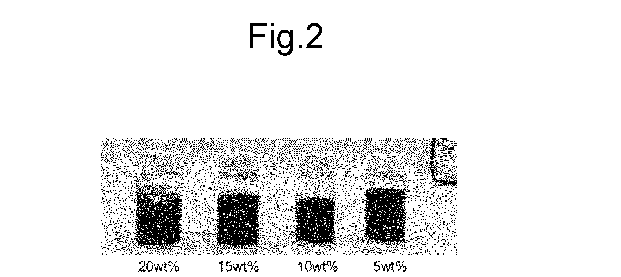

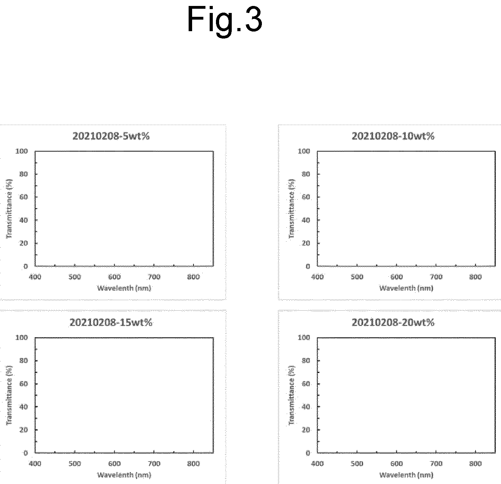

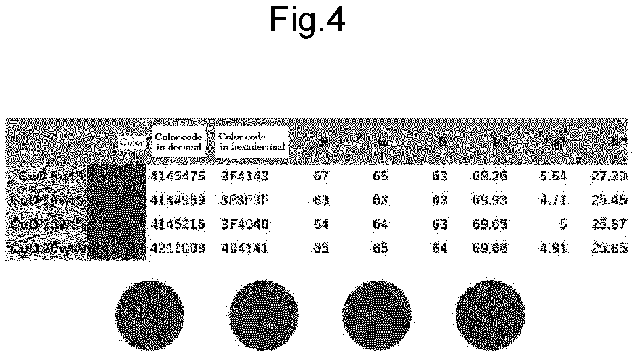

More specifically, for example, even when the content (solid content) of copper oxide nanoparticles in the coating material is 5 mass%, 10 mass%, 15 mass%, or 20 mass%, a favorable black color is exhibited, as shown in Figures 2 to 4.

Furthermore, it is preferable that the zeta potential of the coating material of the present invention is from -36 to -28 mV. When the zeta potential is within this range, the coating material of the present invention exhibits excellent dispersibility, making it possible to suitably produce thin films, color-variable electrodes, and electrochromic elements.

The coating material of the present invention may also contain a binder. The binder is not particularly limited and may include one or more selected from organic binders or inorganic binders. Examples of organic binders include cellulose derivatives, vinyl resins, fluororesins, silicone resins, acrylic resins, epoxy resins, polyester resins, melamine resins, urethane resins, and alkyd resins. Examples of inorganic binders include: products obtained by decomposing hydrolyzable silicon compounds such as alkyl silicates, silicon halides, and partial hydrolysates thereof; organic polysiloxane compounds and their polycondensates; silica, colloidal silica, water glass, silicon compounds; phosphates such as zinc phosphate; metal oxides such as zinc oxide and zirconium oxide; polyphosphates, cement, gypsum, lime, and frits for enamel.

From the viewpoint of forming a homogeneous thin film using the coating material, it is preferable to use one or more selected from polyvinyl alcohol (PVA), sodium carboxymethyl cellulose (CMC), hydroxypropyl cellulose (HPC), and hydroxyethyl cellulose (HEC) as the binder.

The lower limit of the binder content is 0.1 mass% or more, preferably 0.15 mass% or more, relative to the total mass of the coating material (i.e., when the total coating material is taken as 100 mass%). The upper limit of the binder content is 10 mass% or less, preferably 5 mass% or less, and more preferably 2 mass% or less, relative to the total mass of the coating material.

In addition to the binder, various other additives may also be incorporated into the coating material. Examples of such other additives include, for instance, defoaming agents, crosslinking agents, curing catalysts, pigment dispersants, emulsifiers, film-forming aids, thickeners, neutralizing agents, and preservatives.

Another embodiment of the coating material of the present invention is described below. Description of aspects common to the above-described embodiment is omitted.

In one embodiment of the coating material of the present invention, a black electrochromic material containing one or more selected from titanium oxide nanoparticles, titanium nitride nanoparticles, nickel oxide nanoparticles, nickel hydroxide nanoparticles, zirconium oxide nanoparticles, and metallic iridium nanoparticles is dispersed in a weakly acidic solvent.

In this embodiment of the coating material, from the viewpoint of improving dispersibility and long-term stability, it is preferable to add, as the binder, in addition to the materials described above, polyethylene glycol, polypropylene glycol, trifluoromethanesulfonimide, and acrylic resins such as methyl methacrylate ester, as well as polydimethylsiloxane. The use of these binders enables stable manifestation of black electrochromic performance.

### <Mixed Coating Material>

The mixed coating material of the present invention includes the coating material of the present invention containing the above-described copper oxide nanoparticles and a coating material containing another oxide-based electrochromic material.

The method for producing the mixed coating material of the present invention includes a step of mixing the coating material of the present invention containing the above-described copper oxide nanoparticles with a coating material containing another oxide-based electrochromic material.

Specifically, the other oxide-based electrochromic materials to be mixed with the coating material of the present invention containing copper oxide nanoparticles are not particularly limited, as long as the blackening effect by the copper oxide nanoparticles can be obtained. Examples include one or more kinds of metal oxide nanoparticles selected from WO₃, TiO₂, NiO, Ir(OH)₂, V₂O₅, Nb₂O₅, MoO₃, TiN, and ZrO₂. The mixed coating material of the present invention may be in a form obtained by mixing the coating material of the present invention containing the above-described copper oxide nanoparticles with a coating material containing at least one of titanium oxide nanoparticles, titanium nitride nanoparticles, nickel oxide nanoparticles, nickel hydroxide nanoparticles, zirconium oxide nanoparticles, and metallic iridium nanoparticles.

In the mixed coating material of the present invention and its method of production, copper oxide nanoparticles may be used as an additive and added to another oxide-based electrochromic material to prepare a coating material. In this case, the content (solid content) of the copper oxide nanoparticles may be, for example, 0.1 to 5.0 mass% relative to the solid content of the other oxide-based electrochromic material.

The method for mixing the coating material of the present invention with a coating material containing another oxide-based electrochromic material is not particularly limited as long as complete mixing can be achieved. For example, by mixing the coating material of the present invention containing copper oxide nanoparticles with a nanoparticle dispersion of another oxide-based electrochromic material, followed by coating and film formation, it is possible to obtain a thin film in which two types of electrochromic materials are mixed at the nanoparticle level.

### <Color-variable Electrode and Method for Producing the Same>

An embodiment of a color-variable electrode using the coating material containing the black electrochromic material of the present invention, and a method for producing the same, will be described.

In one embodiment of the color-variable electrode of the present invention, the color-variable electrode comprises a multilayer film including an electrode layer and a thin film formed thereon, the thin film being formed from the coating material or mixed coating material of the present invention containing a black electrochromic material.

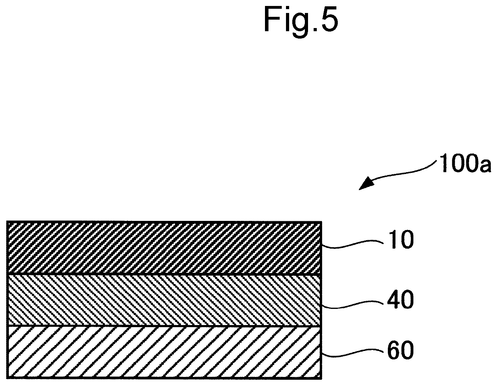

The color-variable electrode 100a illustrated in FIG. 5 is configured by stacking a first electrochromic layer 10, a first transparent electrode layer 40, and a first insulating layer 60. One surface of the first electrochromic layer 10 is connected to one surface of the transparent electrode layer 40, and the other surface of the transparent electrode layer 40 (i.e., the surface opposite to the first electrochromic layer 10) is connected to the first insulating layer 60.

### (1) First Electrochromic Layer 10

The first electrochromic layer 10 is a thin film formed from the coating material or mixed coating material containing the black electrochromic material of the present invention described above. The copper oxide nanoparticles contained in the coating material exhibit a black color in the oxidized state and become colorless and transparent in the reduced state. That is, in one embodiment of the method for producing the color-variable electrode of the present invention, the method includes a step of forming a thin film containing a black electrochromic material on an electrode layer using the coating material or mixed coating material of the present invention described above.

The thickness of the first electrochromic layer 10 is appropriately set depending on the intended purpose, and is, for example, in the range of 20 to 1500 nm. The thickness of the first electrochromic layer 10 may be uniform or non-uniform (i.e., it may vary depending on the position in the planar direction).

### (2) First Transparent Electrode Layer 40

The first transparent electrode layer (electrode layer) 40 is a layer made of a conductive material that is transparent. The conductive material is not particularly limited, as long as it does not undergo deterioration, such as corrosion, to a degree that causes practical problems when used in an electrochemical device. For example, usable conductive materials include: conductive oxides such as indium tin oxide (ITO) and zinc oxide, including zinc oxide doped with metals such as aluminum, silver, or titanium; noble metals such as gold and platinum; corrosion-resistant alloys or metals having a passive film, such as stainless steel and aluminum; and carbon materials such as graphene and carbon nanotubes.

The thickness of the first transparent electrode layer 40 is appropriately set depending on the intended purpose, and is, for example, in the range of 100 to 300 nm. The thickness of the first transparent electrode layer 40 may be uniform or non-uniform (i.e., it may vary depending on the position in the planar direction).

However, from the viewpoint of increasing the contact area between the first electrochromic layer 10 and the first transparent electrode layer 40 to enhance the electrochemical response speed, the thickness of the first transparent electrode layer 40 may be intentionally designed to be non-uniform. Specifically, the surface of the first transparent electrode layer 40 may be formed with irregularities (i.e., the surface smoothness may be reduced). The protruding portions on the surface of the first transparent electrode layer 40 may be formed, for example, from the conductive material.

The first transparent electrode layer 40 may contain known additives for the purpose of improving adhesion to the first electrochromic layer 10 or suppressing corrosion. Examples of known additives include ultraviolet absorbers, antioxidants, lubricants, plasticizers, release agents, tackifiers, color stabilizers, flame retardants, and antistatic agents.

In cases where the color-variable electrode 100a is intended for applications such as light-controlling glass or light-controlling films, transparency is required. Therefore, in the embodiment shown in FIG. 5, the first transparent electrode layer 40 is exemplified. However, the color-variable electrode 100a of the present invention also includes embodiments in which a non-transparent electrode layer is used.

Furthermore, another thin film made of an electrochromic material that provides a color change different from that of the first electrochromic layer 10 may be laminated on the first electrochromic layer 10.

### (3) First Insulating Layer 60

The first insulating layer 60 is a layer made of a transparent insulating material. For example, the first insulating layer 60 can be formed from a resin or glass. Examples of resins include polyethylene terephthalate (PET), polycarbonate, and polyethylene naphthalate (PEN). The first insulating layer 60 may also contain known additives such as ultraviolet absorbers, antioxidants, lubricants, plasticizers, release agents, tackifiers, color stabilizers, flame retardants, and antistatic agents.

The thicknesses of the first insulating layer 60 and the second insulating layer 70 are, for example, in the range of 50 µm to 1.1 mm. The thicknesses of the first insulating layer 60 and the second insulating layer 70 may be uniform or non-uniform (i.e., they may vary depending on the position in the planar direction).

In the color-variable electrode 100a of the present invention, the first insulating layer 60 is not necessarily essential and may be omitted.

### <Electrochromic Device (ECD)>

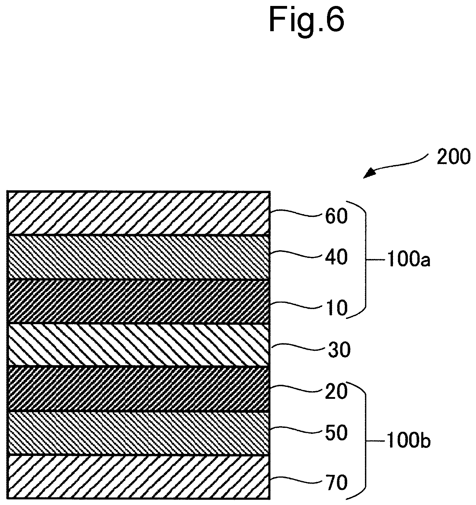

An embodiment of the electrochromic device (hereinafter sometimes referred to as "ECD") of the present invention will be described. FIG. 6 is a schematic structural diagram (cross-sectional view) showing an embodiment of the ECD of the present invention.

The ECD 200 has an electrolyte layer 30 sandwiched between a first color-variable electrode 100a and a second color-variable electrode 100b.

The ECD 200 is driven by applying a voltage to the first color-variable electrode 100a and the second color-variable electrode 100b. Specifically, color change between the following two states can be achieved by applying a voltage:
(State 1) A state in which the first electrochromic layer 10 is in an oxidized state and the second electrochromic layer 20 is in a reduced state.
(State 2) A state in which the first electrochromic layer 10 is in a reduced state and the second electrochromic layer 20 is in an oxidized state.

For example, when the ECD 200 is used as light-controlling glass, the first transparent electrode layer 40 and the second transparent electrode layer 50 are used as the electrode layers, and a transparent material is used for the electrolyte. This type is referred to as a transmissive ECD. In the case of a transmissive ECD, the ECD 200 exhibits a mixed color of the first electrochromic layer 10 and the second electrochromic layer 20.

On the other hand, when the first transparent electrode layer 40 is used as the electrode layer of the first color-variable electrode 100a and a white material is used for the electrolyte layer, the ECD 200 exhibits the color of the first electrochromic layer 10. This type is referred to as a reflective ECD. In the case of a reflective ECD, the colors of the second electrochromic layer 20 and the electrode layer (conductive material) of the second color-variable electrode 100b are not limited.

In the case of a transmissive ECD, the second electrochromic layer 20 is required to have stable electrochemical properties and to exhibit the necessary color change. On the other hand, in the case of a reflective ECD, it is sufficient for the second electrochromic layer 20 to have stable electrochemical properties.

In the ECD 200, the second color-variable electrode 100b may be made of an electrochromic material that is colorless and transparent in an oxidized state and colored in a reduced state.

Hereinafter, the transmissive ECD type will be described in more detail, taking the ECD shown in FIG. 6 as an example.

Specifically, the ECD 200 includes a first electrochromic layer 10 (an example being a thin film formed from a coating material containing copper oxide nanoparticles), a second electrochromic layer 20 (an example being a metal cyanide complex thin film), an electrolyte layer 30, a first transparent electrode layer 40, a second transparent electrode layer 50, a first insulating layer 60, and a second insulating layer 70. The ECD 200 is configured by stacking these layers (10, 20, 30, 40, 50, 60, and 70).

The electrolyte layer 30 is positioned between the first electrochromic layer 10 and the second electrochromic layer 20. The first transparent electrode layer 40 is positioned on the surface of the first electrochromic layer 10 opposite to the electrolyte layer 30. The second transparent electrode layer 50 is positioned on the surface of the second electrochromic layer 20 opposite to the electrolyte layer 30. The first insulating layer 60 is positioned on the surface of the first transparent electrode layer 40 opposite to the first electrochromic layer 10. The second insulating layer 70 is positioned on the surface of the second transparent electrode layer 50 opposite to the second electrochromic layer 20.

The first electrochromic layer 10 and the second electrochromic layer 20 are layers having electrochromic properties, and their colors change reversibly through redox reactions (i.e., reversible changes between a colored state and a colorless state). The first electrochromic layer 10 exhibits a black color in an oxidized state and becomes colorless and transparent in a reduced state.

### (1) First color-variable Electrode 100a

The first color-variable electrode 100a is configured by stacking the above-described first electrochromic layer 10, first transparent electrode layer 40, and first insulating layer 60. Since the first color-variable electrode 100a is common to the color-variable electrode of the present invention described above, further description will be omitted.

### (2) Second color-variable Electrode 100b

Similar to the first color-variable electrode 100a, the second color-variable electrode 100b is composed of an electrochromic material and an electrode layer (conductive material), and may have the same degree of structural flexibility as the first color-variable electrode 100a. For example, the second color-variable electrode 100b may also be a mixture of a plurality of electrochromic materials. In addition, the second color-variable electrode 100b only needs to be made of a material capable of undergoing reversible electrochemical redox reactions, and it is not necessarily required that the colors in the oxidized state and the reduced state differ.

In the embodiment shown in FIG. 6, the second color-variable electrode 100b is configured by stacking the second electrochromic layer 20, the second transparent electrode layer 50, and the second insulating layer 70.

### (2-1) Second Electrochromic Layer 20

The second electrochromic layer 20 contains a material that exhibits a different change between coloring and becoming colorless through redox reactions compared to the copper oxide nanoparticles used in the first electrochromic layer 10, and preferably contains metal cyanide complex nanoparticles or other oxide nanoparticles. That is, the second electrochromic layer 20 may take the form of a metal cyanide complex thin film or another oxide thin film.

When metal cyanide complex nanoparticles or oxide nanoparticles are used in the second electrochromic layer 20, their types are not particularly limited as long as they can undergo reversible redox reactions. Metal cyanide complexes or oxide nanoparticles are materials that exhibit coloring in the oxidized state and become colorless in the reduced state.

Hereinafter, an example in which metal cyanide complex nanoparticles are used in the second electrochromic layer 20 will be described. As the metal cyanide complex particles, particles of a Prussian blue-type metal cyanide complex represented by the general formula "AₓM^{α}[M^{β}(CN)₆]_{y}·zH₂O" are preferably used. By appropriately combining materials that exhibit a color change between blue and transparent, which are complementary colors to black and transparent, it is possible to provide a black-to-transparent ECD.

A is an atom selected from the group consisting of hydrogen, lithium, sodium, and potassium.

M^{α} is one or more metal atoms selected from the group consisting of vanadium, chromium, manganese, iron, ruthenium, cobalt, rhodium, nickel, palladium, platinum, copper, silver, zinc, lanthanum, europium, gadolinium, lutetium, barium, strontium, and calcium.

M^{β} is one or more metal atoms selected from the group consisting of vanadium, chromium, molybdenum, tungsten, manganese, iron, ruthenium, cobalt, nickel, platinum, and copper. In addition, x is from 0 to 3, y is from 0.3 to 1.5, and z is from 0 to 30.

The metal cyanide complex may be a single species represented by the above general formula, or a mixture of two or more species.

The upper limit of the primary particle size of the metal cyanide complex nanoparticles is, for example, 300 nm or less, preferably 100 nm or less, and more preferably 50 nm or less, from the viewpoint of increasing the specific surface area to enhance the electrochemical response speed and forming a smooth thin film. The lower limit of the primary particle size of the metal cyanide complex nanoparticles is not particularly limited, but is, for example, 4 nm or more, preferably 5 nm or more, and more preferably 6 nm or more.

The thickness of the second electrochromic layer 20 is appropriately set depending on the intended purpose, and is, for example, in the range of 500 to 3000 nm. The thickness of the second electrochromic layer 20 may be uniform or may vary (i.e., it may differ depending on the position in the planar direction).

### (3) Electrolyte Layer 30

The electrolyte layer 30 is a layer containing an electrolyte. Electrochromic reactions occur in the electrolyte between the first electrochromic layer 10 and the second electrochromic layer 20.

It is preferable that the electrolyte used in the electrolyte layer 30 contains a (trifluoromethanesulfonyl)imide salt. Examples of (trifluoromethanesulfonyl)imide salts include bis(trifluoromethanesulfonyl)imide, lithium bis(trifluoromethanesulfonyl)imide, potassium bis(trifluoromethanesulfonyl)imide, and sodium bis(trifluoromethanesulfonyl)imide. Among these, potassium bis(trifluoromethanesulfonyl)imide is preferred.

The electrolyte layer 30 may also have, for example, copper oxide nanoparticles dispersed therein.

The content of the electrolyte in the electrolyte layer 30 is not particularly limited. However, from the viewpoint of enhancing the electrochemical response speed in the ECD 200, the content of the electrolyte is preferably, for example, in the range of 0.1 to 1.5 mol/kg, and more preferably in the range of 0.5 to 1.5 mol/kg.

The electrolyte layer 30 may also contain a solvent or a resin in addition to the electrolyte. As the solvent contained in the electrolyte layer 30, a known solvent capable of dissolving the electrolyte contained in the electrolyte layer 30 can be used. Examples include: chain carbonate esters such as dimethyl carbonate, diethyl carbonate, and ethyl methyl carbonate; cyclic carbonate esters such as ethylene carbonate, propylene carbonate, and butylene carbonate; aliphatic carboxylic acid esters such as methyl acetate, ethyl acetate, methyl propionate, ethyl propionate, methyl butyrate, methyl isobutyrate, and methyl trimethylacetate; aromatic carboxylic acid esters such as methyl benzoate and ethyl benzoate; lactones such as γ-butyrolactone and γ-valerolactone; lactams such as ε-caprolactam and N-methylpyrrolidone; cyclic ethers such as tetrahydrofuran, 2-methyltetrahydrofuran, tetrahydropyran, and 1,3-dioxolane; chain ethers such as 1,2-diethoxyethane and ethoxymethoxyethane; sulfones such as ethyl methyl sulfone, sulfolane, 3-methylsulfolane, and 2,4-dimethylsulfolane; nitriles such as acetonitrile, propionitrile, and methoxypropionitrile; phosphate esters such as trimethyl phosphate, ethyldimethyl phosphate, diethylmethyl phosphate, and triethyl phosphate; alcohols such as ethanol and 2-propanol; glycols such as ethylene glycol, propylene glycol, and polyethylene glycol; and water. One or more of these solvents may be selected.

The resin contained in the electrolyte layer 30 is not particularly limited, and one or more known resins can be selected from, for example, acrylic resins, urethane resins, silicone resins, epoxy resins, vinyl chloride resins, ethylene resins, melamine resins, phenolic resins, methyl methacrylate resins, polyvinyl alcohol resins, polyvinyl acetal resins, and polyethylene oxide resins. By containing a resin, the mechanical strength of the electrolyte layer 30 can be improved.

The electrolyte layer 30 may optionally contain various other additives, as long as they do not impair the function of the electrolyte layer 30. Examples of known additives include ultraviolet absorbers, antioxidants, lubricants, plasticizers, release agents, tackifiers, color stabilizers, flame retardants, and antistatic agents.

The thickness of the electrolyte layer 30 is appropriately set depending on the intended purpose, and is, for example, in the range of 50 µm to 0.3 mm. The thickness of the electrolyte layer 30 may be uniform or may vary (i.e., it may differ depending on the position in the planar direction).

As described above, the ECD 200 changes between State 1 and State 2 by the application of a voltage. In a configuration in which the second electrochromic layer 20 uses an electrochromic material composed of, for example, hexacyanoferrate complex particles, and the electrolyte layer 30 uses a transparent material, the ECD 200 exhibits a color change between black and transparent.

The method for manufacturing the electrochromic device (ECD) of the present invention includes a step of laminating a color-variable electrode and an electrolyte layer. An example of the method for manufacturing the ECD will be described below. For example, a commercially available transparent electrode substrate (such as an ITO-coated glass) can be used as the first transparent electrode layer 40 and the second transparent electrode layer 50. Similarly, the glass corresponds to the first insulating layer 60 and the second insulating layer 70. Each of the two substrates is referred to as a first substrate (the second transparent electrode layer 50 + the second insulating layer 70) and a second substrate (the first transparent electrode layer 40 + the first insulating layer 60).

First, the second electrochromic layer 20 is formed on the first substrate using a coating method such as a wet coating process, for example, slit coating, spin coating, bar coating, or spray coating, thereby producing a first deposition substrate (the second color-variable electrode 100b). Similarly, the first electrochromic layer 10 is formed on the second substrate using the same method, thereby producing a second deposition substrate (the first color-variable electrode 100a). An electrolyte layer 30 is then formed on the first deposition substrate (the second color-variable electrode 100b) using a dispenser. Further, a sealing structure is formed around the periphery using a UV-curable resin. Alternatively, the sealing structure can be formed using a commercially available electronic device sealing tape or the like.

Subsequently, the second deposition substrate (the first color-variable electrode 100a) is placed over the first deposition substrate (the second color-variable electrode 100b), and pressing and lamination are performed in a vacuum chamber. When a sealing tape is used, lamination can be performed at room temperature and atmospheric pressure without any problem. In this manner, an ECD 200 having a structure of the first insulating layer 60 / the first transparent electrode layer 40 / the first electrochromic layer 10 / the electrolyte layer 30 / the second electrochromic layer 20 / the second transparent electrode layer 50 / the second insulating layer 70 is obtained.

According to the black electrochromic material, the coating material, and the mixed coating material of the present invention, it is possible to realize a device (such as a color-variable electrode or an electrochromic device) that can stably achieve a color change between black and transparent without using an organic electrochromic material. Such an electrochromic device is useful for applications such as light-controlling glass, displays, indicators, and light-controlling mirrors.

According to the method for manufacturing the black electrochromic material, the coating material, and the mixed coating material of the present invention, it is possible to easily obtain a black electrochromic material, a coating material, and a mixed coating material that can stably achieve a color change between black and transparent.

The black electrochromic material and its manufacturing method, the coating material and its manufacturing method, the mixed coating material and its manufacturing method, the color-variable electrode, and the electrochromic device of the present invention are not limited to the above embodiments.

### [Examples]

The present invention will be described in further detail below based on examples. However, the present invention is not limited to the following examples.

### <Preparation Example 1> Preparation of Copper Oxide Nanoparticle Dispersion Coating Material

A dispersion liquid of copper oxide nanoparticles was prepared as follows.

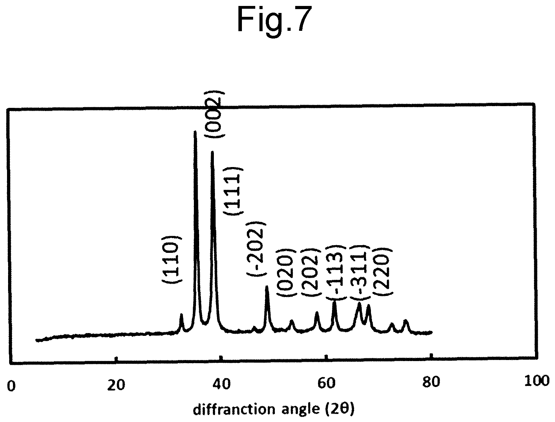

In the first step, basic copper carbonate was heated in an electric furnace at 350°C for 3 hours to obtain copper oxide nanoparticles. The X-ray diffraction results of the obtained copper oxide nanoparticles are shown in FIG. 7.

Next, in the second step, a solvent with adjusted pH was prepared by dissolving a desired amount of citric acid in 50 g of water. For example, by adding approximately 0.0020 g of citric acid to 20 g of water, the pH becomes 3. Into the prepared solvent, 5 g of the copper oxide nanoparticles obtained in the first step were suspended and stirred at 800 rpm for two days.

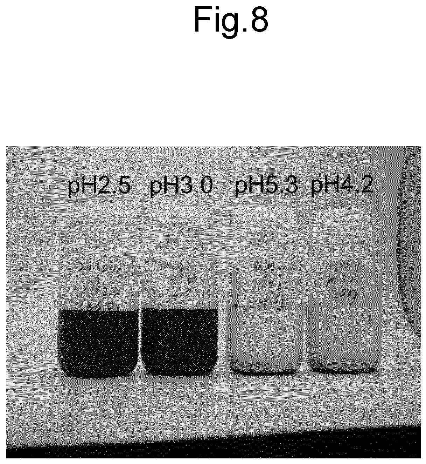

A photograph showing the appearance of the coating material in which the copper oxide nanoparticles were dispersed is shown in FIG. 8. As shown in FIG. 8, it was confirmed that the copper oxide nanoparticles were suitably dispersed in the solvent at a pH of 3 or lower, and that a copper oxide nanoparticle dispersion coating material (hereinafter sometimes simply referred to as "the coating material") could be obtained.

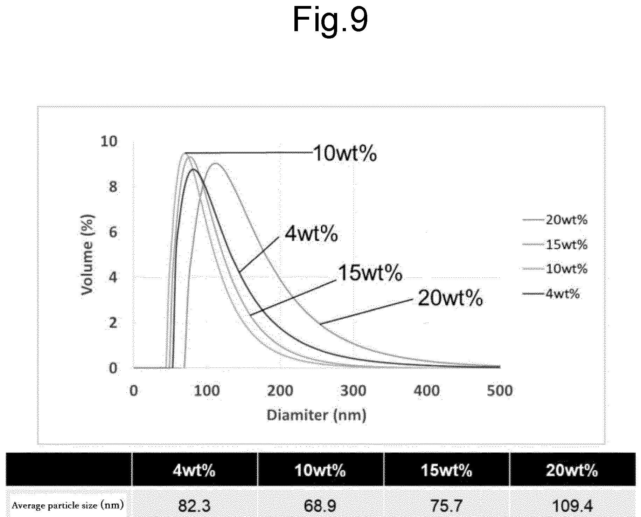

The particle size distribution with respect to the solid content of copper oxide in each of the prepared coating materials is shown in FIG. 9. As shown in FIG. 9, it was found that the coating material obtained in Preparation Example 1 exhibits an average particle size of 100 nm or less when the solid content of the copper oxide nanoparticles is 15% or less.

### <Preparation Example 2> Preparation of Copper Oxide Nanoparticle Thin-Film Electrode

Using the coating material obtained in Preparation Example 1, a thin-film electrode was prepared as described below.

In the coating material (copper oxide nanoparticle dispersion coating material) prepared in Preparation Example 1, polyvinyl alcohol (PVA) was added to improve adhesion to ITO-coated glass. Using this coating material, a copper oxide nanoparticle thin film was formed on an ITO-coated glass substrate by spin coating, thereby producing a copper oxide nanoparticle thin-film electrode.

### <Example 1> Electrochemical Properties of Copper Oxide Nanoparticle Thin-Film Electrode

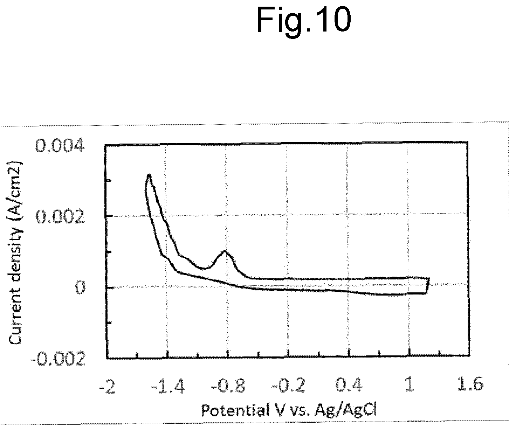

FIG. 10 shows the results of evaluating the visible light transmittance of the copper oxide nanoparticle thin-film electrode prepared in Preparation Example 2 while immersed in an electrolyte, using a USB4000 spectrometer manufactured by Ocean Photonics. A 1 mol/kg LiClO₄/PC solution was used as the electrolyte. When a cyclic voltammogram (CV) was obtained at a scan rate of 5 mV/s, the material exhibited a CV curve, as shown in FIG. 10. From this result, it was confirmed that the copper oxide nanoparticle thin-film electrode prepared in Preparation Example 2 possesses electrochemical properties.

### <Example 2> Influence of PVA Addition Amount During Formation of Copper Oxide Nanoparticle Thin-Film Electrode

In the copper oxide nanoparticle thin-film electrode prepared in Preparation Example 2, the influence of the amount of PVA added to the copper oxide nanoparticle dispersion coating material was investigated.

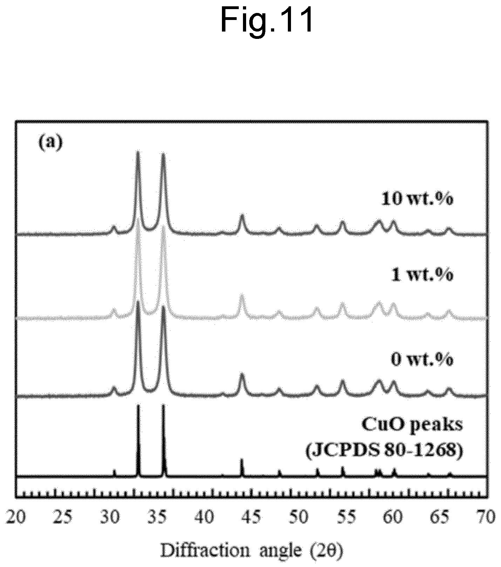

FIG. 11 shows the X-ray structural analysis results of the copper oxide nanoparticle thin-film electrode. As shown in FIG. 11, it was confirmed that the fabricated thin films consist of copper oxide regardless of the amount of PVA added.

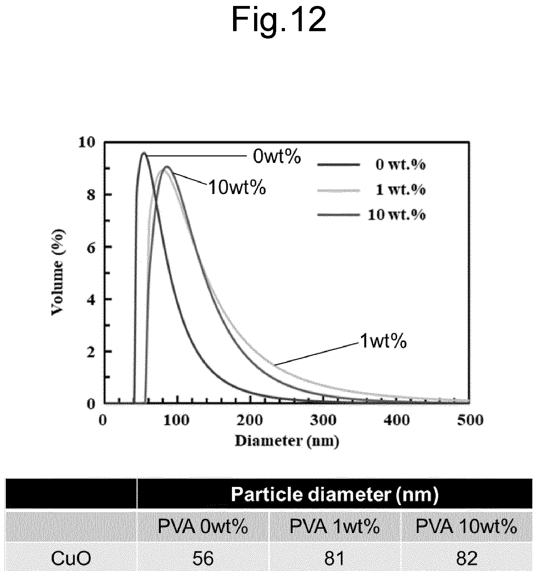

FIG. 12 shows the results of measuring the average particle size using a particle size distribution measurement device based on dynamic light scattering (DLS), manufactured by Otsuka Electronics Co., Ltd. As shown in FIG. 12, even when 10 wt.% of PVA was added relative to the solid content of the copper oxide nanoparticles, the average particle size was approximately 80 nm.

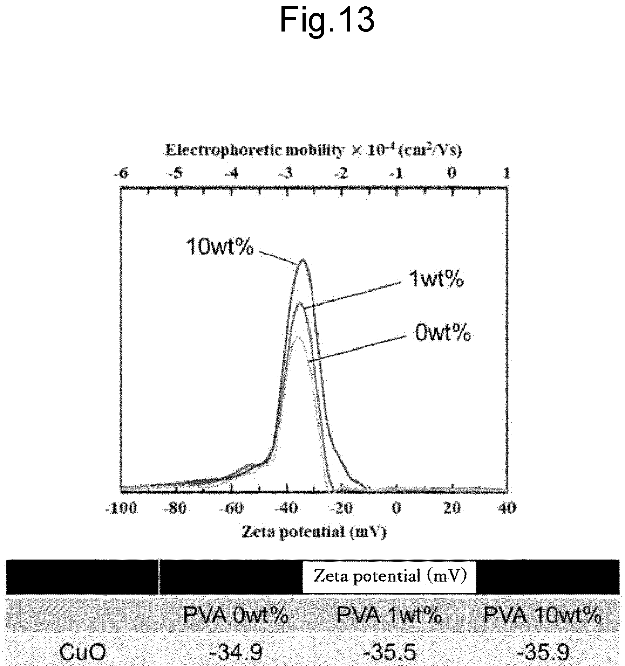

FIG. 13 shows the results of measuring the zeta potential using a zeta potential measurement system manufactured by Otsuka Electronics Co., Ltd. As shown in FIG. 13, the zeta potential was approximately -35 mV regardless of the amount of PVA added.

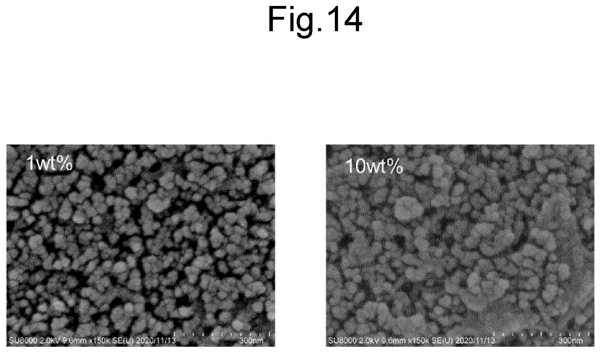

FIG. 14 shows the results of observing the surface structure of the copper oxide nanoparticle thin-film electrode using FE-SEM. As shown in FIG. 14, the size of the copper oxide nanoparticles contained in the thin film was approximately 30 nm. No significant difference was observed depending on the amount of PVA added in this case as well.

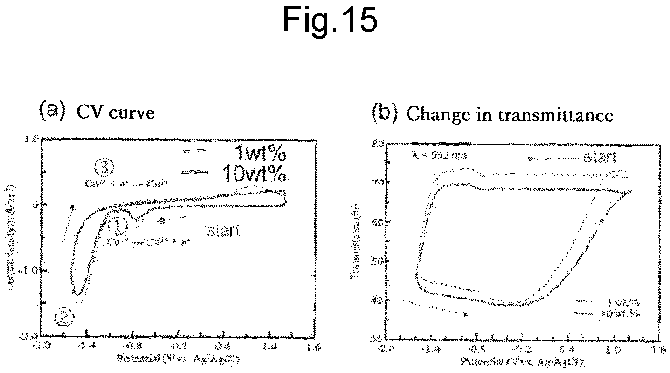

FIG. 15 shows the results of obtaining transmission spectra by electrochemically setting the end potentials to -1.6 V and +1.2 V. As shown in FIG. 15, it was confirmed that the transmittance of the copper oxide nanoparticle thin-film electrode changed in association with the electrochemical reaction.

### <Example 3> Thickness Dependence of the Electrochromic Properties of Copper Oxide Nanoparticle Thin-Film Electrode

The electrochromic properties of the copper oxide nanoparticle thin-film electrode also depend on the thickness of the thin film. In the film formation using a spin coating method, the film thickness was controlled by adjusting the rotation speed and time, as shown in Table 1 below.

**[Table 1]**

| LotNo. | Spin coating conditions | | | | | Weight (g) | | | Estimated coating thickness (µm) |
|---|---|---|---|---|---|---|---|---|---|
| | Dispensed volume (µl) | 1st (rpm) | Time (s) | 2nd (rpm) | Time (s) | Substrate | After coating | Coating amount | |
| 300 | 450 | 300 | 600 | - | - | 4.3979 | 4.4019 | 0.004 | 0.40 |
| 300-700 | 450 | 300 | 10 | 700 | 10 | 4.4867 | 4.4892 | 0.0025 | 0.25 |
| 400-800 | 450 | 400 | 10 | 800 | 10 | 4.4705 | 4.4721 | 0.0016 | 0.16 |
| 500-1000 | 450 | 500 | 10 | 1000 | 10 | 4.3998 | 4.4016 | 0.0018 | 0.18 |

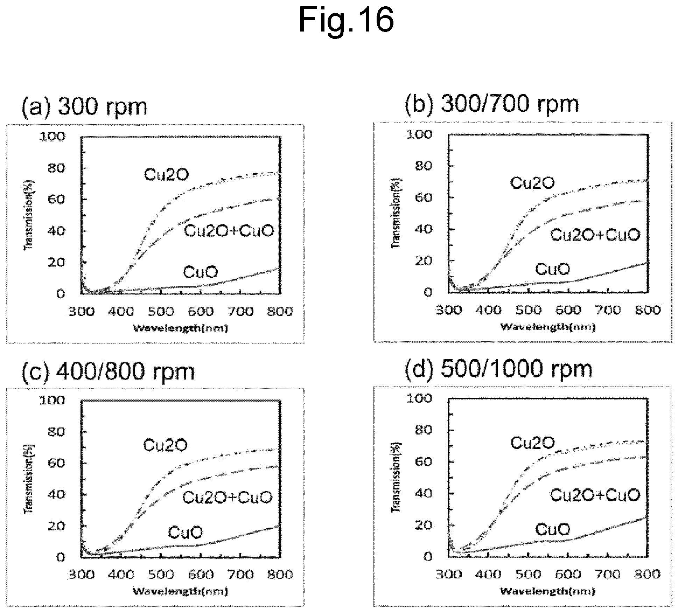

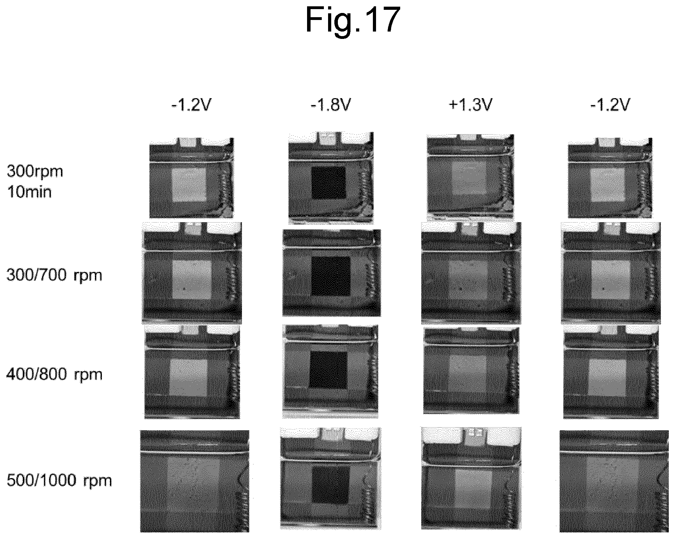

FIG. 16 shows the changes in optical transmission spectra under each film formation condition. As shown in FIG. 16, the copper oxide nanoparticle thin-film electrode formed at a rotation speed of 300 rpm exhibited a large transmittance change in response to the redox reaction. In addition, based on the shape of the transmission spectrum, it was found that the film exhibited a transmission spectrum with almost no wavelength dependence in the range from 450 nm to 650 nm, and that a color change from transparent to gray (black) occurred. Furthermore, when the visible light transmittance (T_{VIS}) was calculated from the obtained transmission spectrum, it was found that T_{VIS} = 4.49% in the CuO state, indicating a very low visible light transmittance. FIG. 17 shows photographs of the appearance changes of each sample associated with the electrochemical reaction.

### <Example 4> Preparation of Mixed Coating Material Using Copper Oxide Nanoparticle Dispersion Coating Material

The copper oxide nanoparticle dispersion coating material prepared in Preparation Example 1 was used as an additive and added to 10 g of a tungsten oxide nanoparticle dispersion coating material with a solid content of 15 wt.%. The copper oxide nanoparticle dispersion coating material used here had a solid content of 2 wt.%, and it was added so that its amount would be 1% relative to the solid content of the tungsten oxide nanoparticles, thereby obtaining a mixed coating material.

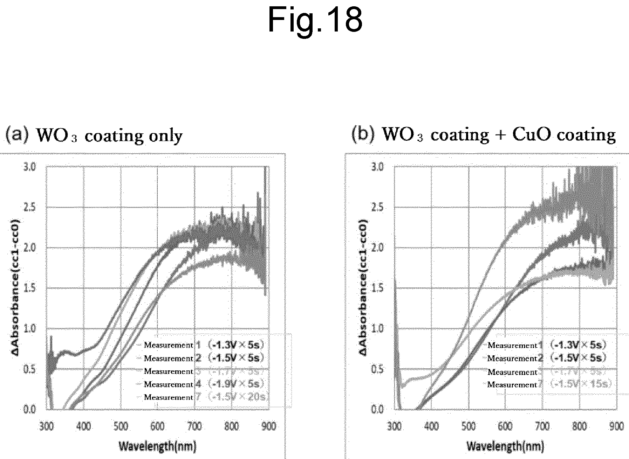

FIG. 18 shows the changes in optical transmission spectra of the thin-film electrode fabricated from the mixed coating material. A 1 mol/kg KTFSI/PC solution was used as the electrolyte. As shown in FIG. 18, compared to the thin-film electrode fabricated solely from the tungsten oxide nanoparticle dispersion coating material, the thin-film electrode fabricated from the mixed coating material exhibited increased absorbance, particularly in the long-wavelength region (600 nm and above). From this, it was confirmed that by using the copper oxide nanoparticle dispersion coating material as an additive and mixing it with another oxide-based nanoparticle dispersion coating material, the characteristics of the thin-film electrode were improved, and a deeper color tone was achieved in the colored state.

As a comparative test, when a dispersion liquid was prepared using copper(II) oxide powder (99.9%, manufactured by FUJIFILM Wako Pure Chemical Corporation) that did not use basic copper carbonate as a raw material, with reference to Preparation Example 1, significant precipitation occurred and dispersion could not be achieved.

### <Example 5> Electrochemical Properties of Thin-Film Electrodes Using Various Nanoparticle Coating Materials

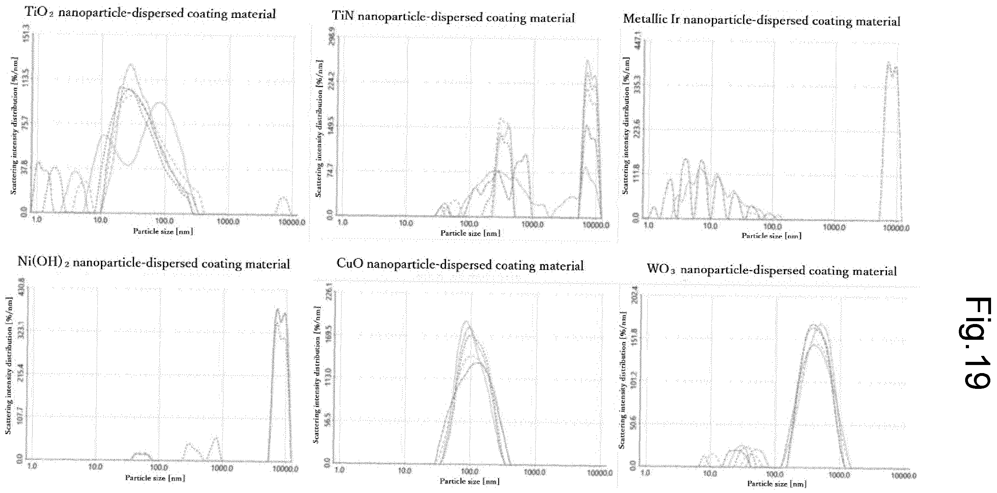

It was found that various oxide materials can also exhibit black coloration as black electrochromic materials by controlling their particle size and functionality. For example, coating materials having the respective particle size distributions shown in FIG. 19 were prepared using TiO₂, TiN, Ir metal, and Ni(OH)₂. In this case, polyethylene glycol and polypropylene glycol were mixed at a solid weight ratio of 1:1 and added as a binder in an amount of 10 wt.% relative to the solid content of each nanoparticle, thereby preparing the coating materials. These coating materials were applied to fluorine-doped SnO₂ conductive glass (FTO glass) under the following spin coating conditions: a dispensing volume of 300 µL, 300 rpm for the first spin, and 3000 rpm for the second spin. After coating, the films were heated on a hot plate at 100°C for 30 minutes. As a result, the obtained dry film thicknesses were: TiO₂ (220 nm), TiN (40 nm), Ir metal (220 nm), and NiO(OH)₂ (120 nm).

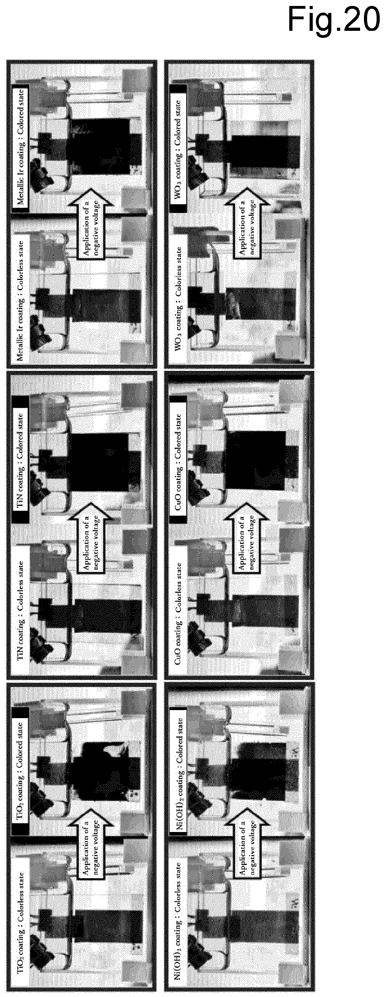

FIG. 20 shows the appearance changes associated with electrochemical redox reactions when each of the fabricated thin-film electrodes was immersed in an electrolyte. A 1 mol/kg LiTFSI/PC solution was used as the electrolyte. As shown in FIG. 20, the WO₃ thin-film electrode of the comparative example exhibited a dark blue color, whereas all the other thin-film electrodes were found to exhibit a black color.

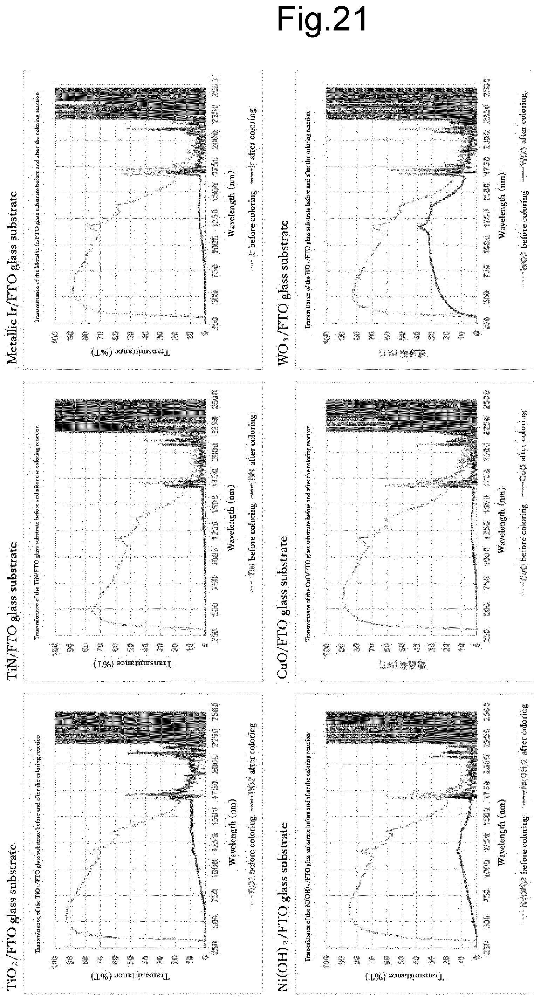

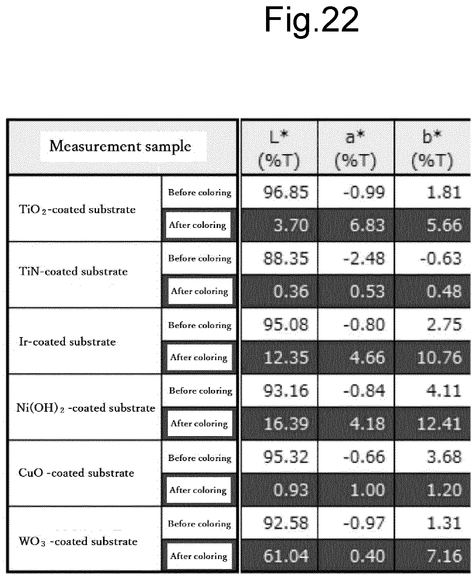

FIG. 21 shows the changes in optical transmission spectra in the ultraviolet, visible, and near-infrared regions (250 to 2500 nm) of each fabricated thin-film electrode. The same electrolyte as described above was used. As shown in FIG. 21, the WO₃ thin-film electrode in the colored state remained at a transmittance level of several tens of percent, whereas all of the other materials showed transmittance below 10% in the visible region, indicating that they exhibited a black-colored state. FIG. 22 shows the chromaticity calculated from the obtained data. Regarding the L* value, which is an indicator of lightness and also represents the degree of blackness, TiO₂, TiN, and CuO in particular exhibited approximately 95% in the colorless state and only a few percent (sometimes less than 1%) in the colored state, clearly demonstrating black coloration also from the numerical data.

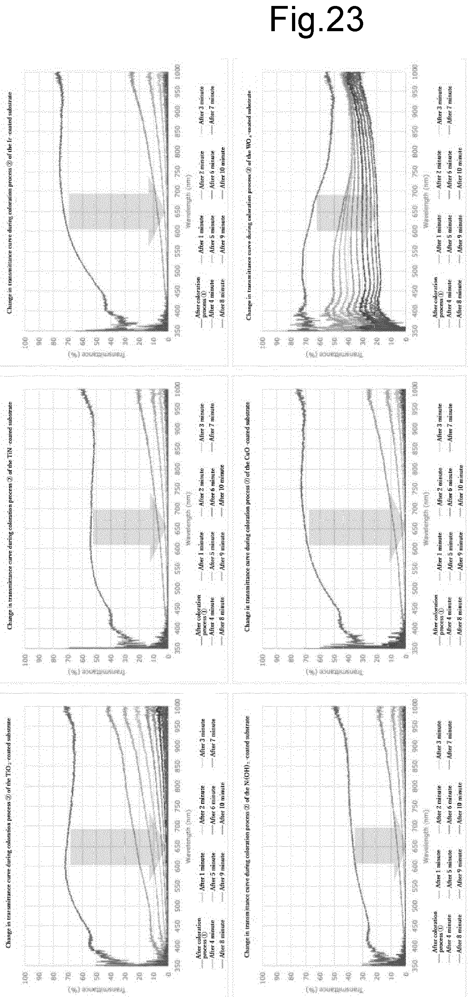

FIG. 23 shows the time-dependent changes in optical transmission spectra in the ultraviolet, visible, and near-infrared regions (250 to 2500 nm) of each fabricated thin-film electrode. The same electrolyte as described above was used. As shown in FIG. 23, upon applying a voltage of -2.5 V, the films transitioned to the colored state, and a gradual decrease in transmittance was observed. Although the response speed is determined by factors such as the applied voltage, sample size, and the type and concentration of the electrolyte, the electrodes exhibited memory characteristics, and because of this memory effect, that colored state could be maintained even after the applied voltage was removed. Therefore, it was confirmed that each thin-film electrode possesses functionality enabling multi-step and arbitrary light control.

### <Example 6> Electrochemical Properties of Thin-Film Electrode Using Zirconium Oxide Nanoparticle Coating Material

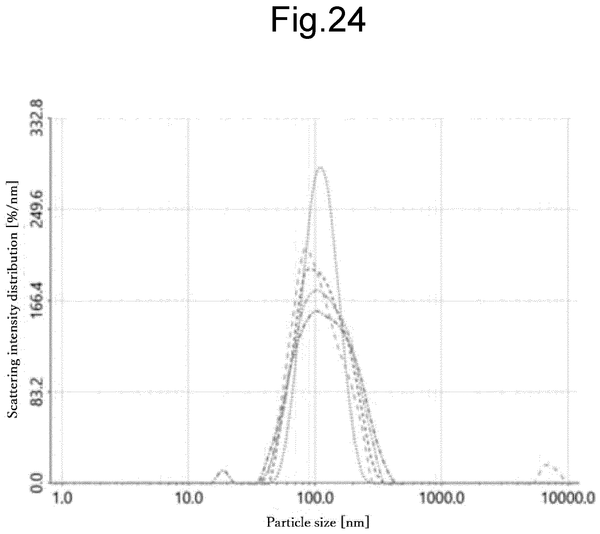

In the same manner as in Example 5, a coating material having the particle size distribution shown in FIG. 24 was prepared using ZrO₂. The prepared coating material was applied to fluorine-doped SnO₂ conductive glass (FTO glass) under the following spin coating conditions: dispensing volume of 300 µL, 300 rpm for the first spin, and 3000 rpm for the second spin. After coating, the films were heated on a hot plate at 100°C for 30 minutes, and a dry film thickness of 80 nm was obtained for ZrO₂ in each sample.

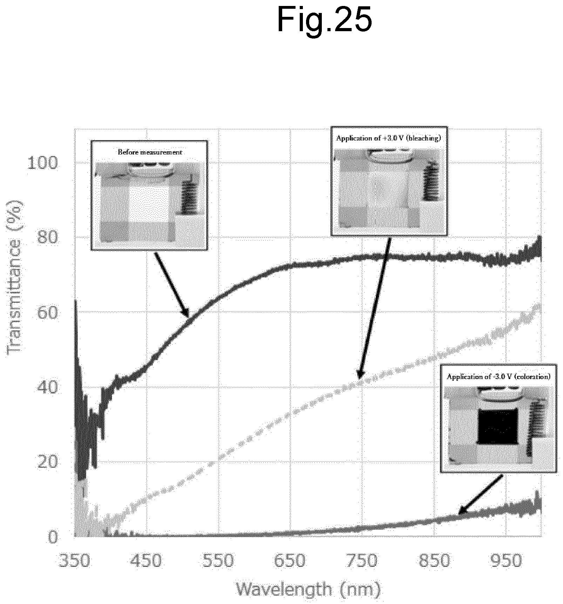

FIG. 25 shows the appearance changes associated with electrochemical redox reactions when the fabricated ZrO₂ thin-film electrode was immersed in an electrolyte. A 1 mol/kg LiTFSI/PC solution was used as the electrolyte. As shown in FIG. 25, the ZrO₂ thin-film electrode was found to exhibit a black color.

The above has described embodiments of the present invention and variations based thereon. However, the present invention is not limited thereto, and various alternative embodiments and modifications may be conceived by those skilled in the art without departing from the spirit of the invention or the scope of the appended claims.

### [Explanation of Reference Numerals]

- 10: : First electrochromic layer
- 20: : Second electrochromic layer
- 30: : Electrolyte layer
- 40: : First transparent electrode layer
- 50: : Second transparent electrode layer
- 60: : First insulating layer
- 70: : Second insulating layer
- 100a: : First light-controlling electrode
- 100b: : Second light-controlling electrode
- 200: : ECD

## Claims

1. A black electrochromic material that reversibly changes color between black and transparent through an electrochemical redox reaction,
wherein the black electrochromic material comprises one or more nanoparticles selected from the group consisting of copper oxide nanoparticles that are heat-treated products of basic copper carbonate, titanium oxide nanoparticles, titanium nitride nanoparticles, nickel oxide nanoparticles, nickel hydroxide nanoparticles, zirconium oxide nanoparticles, and metallic iridium nanoparticles.

2. A coating material that reversibly changes color between black and transparent through an electrochemical redox reaction,
comprising the black electrochromic material according to claim 1 dispersed in a weakly acidic solvent.

3. The coating material according to claim 2,
wherein the solvent contains citric acid and the solvent has a pH of 3.0 or less.

4. The coating material according to claim 2,
wherein the content of the nanoparticles is 1 mass% or more and 20 mass% or less.

5. The coating material according to claim 2,
wherein the zeta potential is from -36 mV to -28 mV.

6. A mixed coating material comprising the coating material according to claim 2 and a coating material containing another oxide-based electrochromic material.

7. The coating material according to claim 2 or the mixed coating material according to claim 6, comprising one or more selected from the group consisting of polyvinyl alcohol (PVA), sodium carboxymethyl cellulose (CMC), hydroxypropyl cellulose (HPC), hydroxyethyl cellulose (HEC), polyethylene glycol, polypropylene glycol, trifluoromethanesulfonylimide, methyl methacrylate, and polydimethylsiloxane, as a binder.

8. A color-variable electrode comprising a thin film containing the black electrochromic material, the thin film being formed on an electrode layer using the coating material according to claim 2 or the mixed coating material according to claim 6.

9. An electrochromic device comprising the color-variable electrode according to claim 8.

10. The electrochromic device according to claim 9,
comprising an electrode composed of an electrochromic material that becomes transparent in an oxidized state.

11. A method for producing a black electrochromic material that reversibly changes color between black and transparent through an electrochemical redox reaction,
the method comprising a first step of obtaining copper oxide nanoparticles by heating basic copper carbonate.

12. A method for producing a coating material that reversibly changes color between black and transparent through an electrochemical redox reaction,
the method comprising:
a first step of obtaining copper oxide nanoparticles by heating basic copper carbonate; and
a second step of dispersing the copper oxide nanoparticles in a weakly acidic solvent to obtain the coating material.

13. The method for producing a coating material according to claim 12,
wherein, in the second step, the solvent contains citric acid and the solvent has a pH of 3.0 or less.

14. The method for producing a coating material according to claim 12,
wherein the content of the copper oxide nanoparticles in the coating material is 1 mass% or more and 20 mass% or less.

15. A method for producing a mixed coating material,
comprising a step of mixing the coating material according to claim 2 with a coating material containing another oxide-based electrochromic material.

16. The method for producing a coating material according to claim 12 or the method for producing a mixed coating material according to claim 15,
comprising using one or more selected from the group consisting of polyvinyl alcohol (PVA), sodium carboxymethyl cellulose (CMC), hydroxypropyl cellulose (HPC), hydroxyethyl cellulose (HEC), polyethylene glycol, polypropylene glycol, trifluoromethanesulfonylimide, methyl methacrylate, and polydimethylsiloxane, as a binder.

17. A method for producing a color-variable electrode,
comprising a step of forming a thin film containing a black electrochromic material on an electrode layer using the coating material according to any one of claims 2 to 5 or the mixed coating material according to claim 6.

18. A method for producing an electrochromic device,
comprising a step of laminating the color-variable electrode according to claim 8 and an electrolyte layer.
